# EUROPEAN PATENT APPLICATION

(11) **EP 4 280 088 A1**
(43) Date of publication of application: **22.11.2023**
(21) Application number: 21919020.4
(22) Date of filing: 16.11.2021
(51) Int. Cl.: G06F 17/18

(54) **TIME SERIES DATA TREND FEATURE EXTRACTION METHOD BASED ON DYNAMIC GRID DIVISION**

(30) Priority: 15.01.2021 CN 202110054385
(71) Applicant: Hangzhou Anmaisheng Intelligent Technology Co., Ltd., Hangzhou, Zhejiang 310051 (CN)
(72) Inventor: YANG, Haojie, Hangzhou, Zhejiang 310051 (CN); YANG, Yu, Hangzhou, Zhejiang 310051 (CN); SUN, Fengcheng, Hangzhou, Zhejiang 310051 (CN)
(74) Representative: Studio Torta S.p.A.
(86) International application number: PCT/CN2021/130798
(87) International publication number: WO 2022/151829

(57) **Abstract**

A time series data trend feature extraction method based on dynamic grid division, the method comprising the following steps: setting a target number N, dynamically dividing grids according to the density distribution of time series data, and respectively dividing the time and value of the time series data into m segments and n segments; traversing local data in each grid, and acquiring a priority queue of key feature points by using a linear segmentation distance calculation means; summarizing the priority queues of the key feature points extracted from the grids, so as to obtain a one-dimensional feature sub-sequence S1 of original data; according to the target number N, extracting data points from a time series at equal intervals to obtain a one-dimensional trend sub-sequence S2 of the original data; and integrating the feature sub-sequence S1 and the trend sub-sequence S2 to obtain a new sequence S for data mining. By means of the method, key feature points and trend information in time series data can be reserved by using a small number of data points, such that the efficiency and accuracy of subsequent data modeling and analysis are improved.

## Description

### FIELD

The present application relates to the technical field of time series data, and in particular to a method for extracting a trend feature from time series data based on a dynamic mesh.

### BACKGROUND

Time-series data, as an ordered dataset that changes over time, is widely used in the fields of industry, agriculture, finance, science engineering, sociology and the like, and tends to be high-dimensional and multivariable. Therefore, the time-series data has increased explosively in volume over recent years, leading to challenges in data storage and data value mining. Especially in various industries, the time-series data is mostly smoothly distributed, and thus contains a large amount of redundant information. In order to improve the computational efficiency and analytical accuracy of a data mining model, features of the time-series data are generally extracted at equal intervals to compress the data. However, only a major trend of the time-series data is preserved and many key features are missed out.

Chinese patent publication No. CN108804731A proposes a method for extracting a trend feature of a time series based on double evaluation factors of important points, in which respective degrees of importance of the important points to the overall trend are comprehensively evaluated based on the piecewise linear representation of the time series together with calculated distance factors and trend factors, to determine cut-off points, which has high degree of extraction accuracy for compressing the data. For a piece fluctuates considerably, however, a feature that is of secondary importance is likely to be omitted in this case, and parameter identification based on a specific dataset is necessary for a weight and a threshold in this case, resulting in poor applicability and flexibility.

In the conventional technology, data points are extracted from time-series data at equal intervals, which preserves the major trend only and is more likely to omit key features of the time-series data. In the method for extracting the trend feature based on dual evaluation factors of important points, the major trend and the key features of the time series data are extracted based on the piecewise linear supplemented with the distance factor and the trend factor, whereas the feature that is of secondary importance is more likely to be omitted and also the parameter identification based on a specific dataset is necessary for the weight and the threshold, imposing certain restraints on this method.

Therefore, it is necessary to propose a method for extracting a trend feature from time-series data, so as to preserve an overall trend and local feature information of the time-series data, thereby facilitating efficiency and accuracy of a subsequent data mining model.

### SUMMARY

In the present disclosure, a method for extracting a trend feature from time series data based on a dynamic mesh is proposed in order to solve the problem of low efficiency and large error in mining and modeling of raw data due to the massiveness and complexity of time series data. Key feature points and trend information of the time series data can be preserved with few data points, thereby improving the efficiency and the accuracy of the subsequent data modeling and analysis.

In order to achieve the above objectives, the following technical solutions are proposed.

A method for extracting a trend feature from time series data based on a dynamic mesh includes: a step A of setting a target number N, and dividing time and values in the time series data into m pieces and n pieces respectively based on the dynamic mesh indicating density distribution of the time series data; a step B of for each of sub-grids, traversing local data in the sub-grid and acquiring a priority queue of key feature points based on distances calculated through a piecewise linear; a step C of aggregating the acquired priority queues of the key feature points in all the sub-grids, to obtain a one-dimensional feature subsequence S1 of the time series data; a step D of extracting N data points from the time series data at equal intervals, to obtain a one-dimensional trend subsequence S2 of the time series data; and a step E of integrating the feature subsequence S1 and the trend subsequence S2 to obtain a sequence S for data mining.

In the present disclosure, feature information and trend information of the raw data are extracted by constructing the feature subsequence and the trend subsequence, respectively. The target length of the subsequence is set to N so that the lengths of the sample data in the data mining model are equal. Based on the dynamic mesh indicating density distribution of the raw data, key feature points including local breakpoints and inflection points are obtained based on distances calculated by applying the piecewise linear locally, and the priority queue of the key feature points is obtained. The extracted data points for all the sub-grids are aggregated to obtain a feature subsequence in form of one-dimensional array in which elements are equally spaced. In this array, the local data with intensive features is strengthened and the redundant local data that is distributed smoothly is weakened. The trend subsequence in form of one-dimensional array is obtained by extracting N data points at equal intervals. A final sequence is constructed based on the feature subsequence and the trend subsequence, as the basis for data mining.

In the present disclosure, based on the dynamic mesh indicating density distribution of the raw data, data points distributed densely is divided into few pieces, and data points distributed relatively sparsely and varying significantly is divided into more segments. For the local data in the sub-grid, the priority queue of the key feature points is obtained based on distances calculated through the piecewise linear, so that both the key feature points and the feature points that are of secondary importance are retained. The extracted data feature points are aggregated into a one-dimensional array in which elements are equally spaced, as the feature subsequence of the raw data. The feature subsequence not only retains the feature information of the raw data, but also strengthens the local features of data with intensive features and weakens the local features of redundant data that is distributed smoothly. In addition, the one-dimensional trend subsequence of the raw data obtained by extracting data points of the target number at equal intervals retains the overall trend information of the raw data. The sequence constructed by concatenating the feature subsequence and the trend subsequence retains the key feature points and the trend information of the raw data while compressing the raw data and removing the redundant information, and therefore the efficiency and accuracy of the data mining and modeling are improved. Moreover, the parameters are simply set, and the method is applicable.

In an embodiment, the step A includes: a sub-step A1 of dividing the values into n pieces at equal intervals within a range of the time series data, wherein the time in the time series data serve as an x-axis and the values serve as a y-axis, and n ranges from 3N/4 to N/4 inclusive; a sub-step A2 of determining whether a condition that data points in n/2 pieces exceed 80% of a length of the time series data is satisfied, and modifying n and returning to the sub-step A1 if it is determined that the condition is not satisfied, until the condition is satisfied or n is equal to N/4; and a sub-step A3 of dividing the time into m pieces at equal intervals within the range of the time series data, where the time series data is distributed among m*n sub-grids, and m=N-n.

In an embodiment, the step B includes: a sub-step B1 of setting a ratio γ, and traversing the local data in the sub-grid; a sub-step B2 of calculating vertical distances d*ᵢ* from data points to a line connecting a and b sequentially, acquiring a maximum d*ₘₐₓ* from the vertical distances, calculating an average d*ₘₑₐₙ* of the calculated vertical distances, and determining a data point corresponding to d*ₘₐₓ* as an important point P*ᵢ* in a case that d*ₘₐₓ* is greater than or equal to γ* d*ₘₑₐₙ*, where a and b serve as endpoints of the local data; and a sub-step B3 of dividing the local data into two pieces with the important point P*ᵢ* as a cut-off point, and performing the sub-step B2 for the two pieces separately; and a sub-step B4 of integrating important points P*ᵢ* determined in the sub-steps B2 to B3 into a priority queue for the local data in the sub-grid based on respective vertical distances, after repeating the sub-steps B2 to B3 until no important point is acquired.

In an embodiment, the sub-step B4 further includes: determining a date point corresponding to a median of the local data in the sub-grid as the important point and integrating the determined important point into the priority queue, in a case that the priority queue is empty.

In an embodiment, the step C includes: a sub-step C1 of aggregating the determined important points in all the sub-grids, reducing the ratio γ and returning to the sub-steps B1 to B4 in a case that the number of the important points is less than N, and eliminating redundant data points in a case that the number of the important points is greater than N; and a sub-step C2 of arranging the determined important points in a time order and removing time information, to obtain a one-dimensional array as the feature subsequence S 1 of the time series data, wherein elements in the one-dimensional array are equally spaced.

In an embodiment, in the sub-step C1, the redundant data points are eliminated (1) in such a way that at least one important point is retained for each sub-grid, and (2) in an ascending order of the vertical distances.

In an embodiment, the step E includes:
a sub-step E1 of reversing the trend subsequence S2 to obtain a subsequence S2'; and
a sub-step E2 of concatenating the subsequence S1 and the subsequence S2' to obtain the one-dimensional sequence S with a length of 2N, wherein elements in the one-dimensional sequence S are equally spaced.

The beneficial effects of the present disclosure are as follows. The priority queues of the key feature points are obtained based on distances calculated by applying the piecewise linear locally, and are aggregated to obtain the one-dimensional feature subsequence of the raw time series data finally. The one-dimensional trend subsequence of the raw data is obtained by extracting data points of the target number from the raw data at equal intervals. The sequence indicating the compressed raw data is finally constructed based on the feature subsequence and the trend subsequence. With the present disclosure, the key feature points and the trend information of the raw data can be retained while compressing the raw data into the target number, thereby improving the efficiency and accuracy of data mining, modeling and analysis.

### BRIEF DESCRIPTION OF THE DRAWINGS

FIG. 1 is a schematic flowchart of an algorithm;
FIG. 2 schematically illustrates raw time series data according to an embodiment;
FIG. 3 schematically illustrates the raw time series data subjected to downsampling at equal intervals;
FIG. 4 schematically illustrates the downsampling at equal intervals according to an embodiment;
FIG. 5 schematically illustrates downsampling at unequal intervals based on a dynamic mesh;
FIG. 6 schematically illustrates the downsampling at unequal intervals based on the dynamic mesh according to an embodiment; and
FIG. 7 schematically illustrates a sequence newly constructed based on a feature subsequence and a trend subsequence according to an embodiment.

### DETAILED DESCRIPTION OF THE EMBODIMENTS

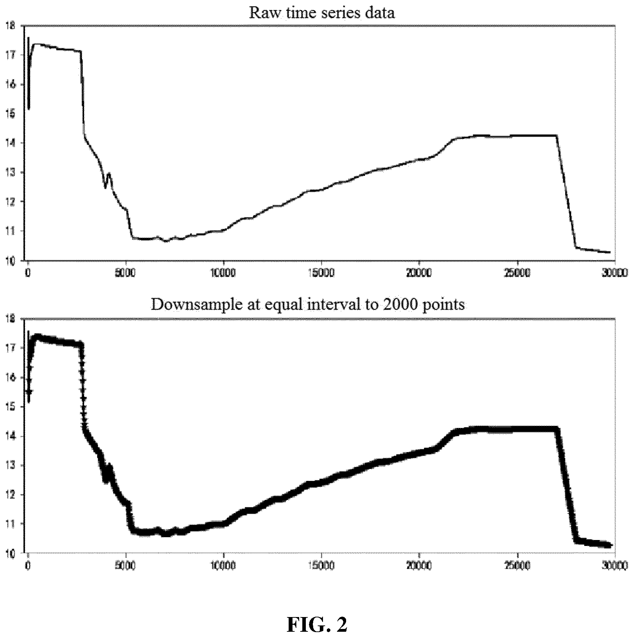

In an embodiment, raw time series data is a temperature signal of a device. The temperature is sampled at 1s intervals, and the length of the data is 30,000. Reference is made to FIG. 2, which illustrates the time series data before and after being down-sampled at equal intervals. It can be seen from FIG. 2 that some features at the beginning of the time series data fail to be extracted even though the number of sampling points is 2000.

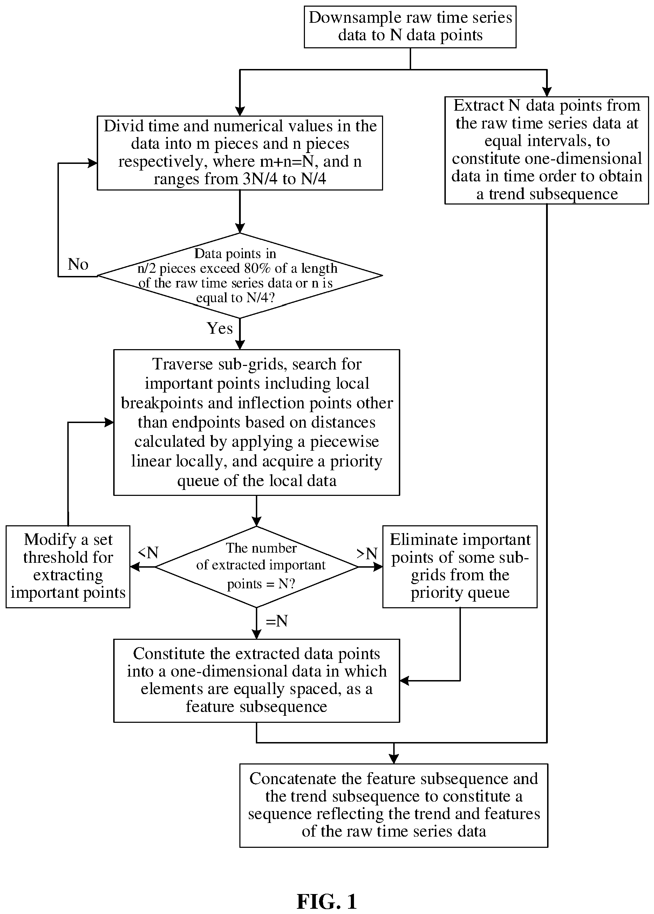

A method for extracting a trend feature from time series data based on a dynamic mesh is proposed according to the present embodiment. Referring to FIG. 1, the method includes the following steps A to E.

In step A, a target number 120 is set, and time in the time series data is divided into 62 pieces and numerical values in the time series data are divided into 58 pieces, based on a dynamic mesh indicating density distribution of the time series data.

The step A includes the following sub-steps A1 to A3.

In sub-step A1, the numerical values are divided into n pieces at equal intervals within a range of the time series data with the time in the time series data being an x-axis and the numerical values being a y-axis, where n ranges from 75 to 25.

In sub-step A2, it is determined whether a condition that data points contained in any n/2 pieces exceed 80% of the length of the raw data is satisfied, and in a case that the condition is not satisfied, n is modified and the method returns to sub-step A1 until the condition is satisfied or n is equal to 25.

In sub-step A3, after the sub-step A1 and the sub-step A2, the condition is satisfied in a case that n is equal to 58, the time is divided into 62 pieces at equal intervals within the range of the time series data, and the raw data is ultimately distributed among 62*58 sub-grids.

In step B, local data in each of the sub-grids is traversed, and a priority queue for key feature points is obtained based on distances calculated through a piecewise linear.

The step B includes the following sub-steps B1 to B4.

In sub-step B1, a ratio γ is initially set to 1.5, and local data in the sub-grid is traversed.

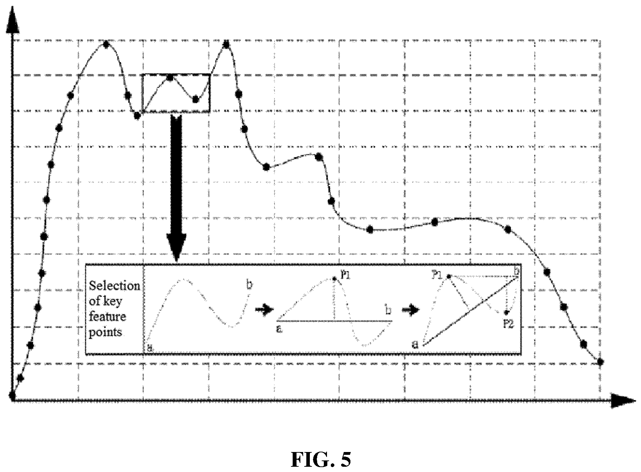

In sub-step B2, reference is made to FIG. 5, which schematically illustrates downsampling at unequal intervals based on the dynamic mesh. Extraction of important points is illustrated with the data in the box as an example. The endpoints of the data in the region are represented as a and b. The line connecting a and b serves as the x-axis of the converted coordinates system. Vertical distances d*ᵢ* from data points to the line connecting a and b are calculated sequentially. A maximum d*ₘₐₓ* among the calculated vertical distances is acquired, and an average d*ₘₑₐₙ* of the calculated vertical distances is calculated. In a case that d*ₘₐₓ* is greater than or equal to γ* d*ₘₑₐₙ*, a data point corresponding to d*ₘₐₓ* is determined as an important point P1.

In sub-step B3, the data in the region is divided into two pieces based on the important point P1, which serves as a cut-off point between the two pieces. For each of the two pieces, the sub-step B2 is performed, to obtain a second important point P2 which satisfies a condition.

In sub-step B4, after the sub-steps B2 to B3 are repeated until no important point is acquired, the important points P1 and P2 acquired in the sub-steps B2 to B3 are integrated into a priority queue [P1, P2] for the data in the sub-grid based on the vertical distances. In a case that a priority queue corresponding to a sub-grid is empty, a data point corresponding to a median of the local data in the sub-grid is determined as the important point and is integrated into the priority queue.

In step C, the priority queues of key feature points of all the sub-grids are aggregated to obtain a one-dimensional feature subsequence S1 of the raw data.

The step C includes the following sub-steps C1 to C2.

In sub-step C1, the important points in all the sub-grids are aggregated. In a case that the number of the aggregated important points is less than 120, the ratio γ is reduced and the steps B1 to B4 are repeated. In a case that the number of the aggregated important points is greater than 120, redundant data points are eliminated. The redundant data points are eliminated in such a way that at least one important point is retained for each the sub-grid, and in an ascending order of vertical distances.

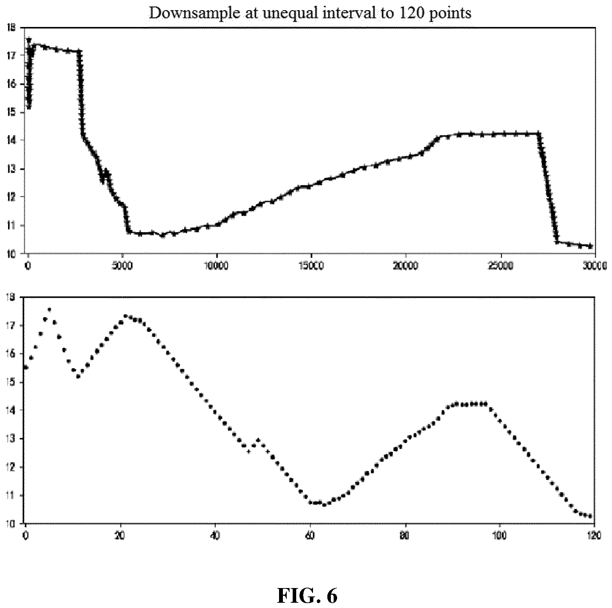

In step C2, all the determined important points are arranged in a time order, and time information is deleted to obtain a one-dimensional array in which elements are equally spaced. The array is the feature subsequence S1 of the raw data. Reference is made to FIG. 6, which schematically illustrates the downsampling at unequal intervals based on the dynamic mesh according to an embodiment, in which 120 data points are sampled. The subsequence S1 not only retains the feature information of the raw data, but also strengthens the local features of data with intensive features and weakens the local features of redundant data that is distributed smoothly.

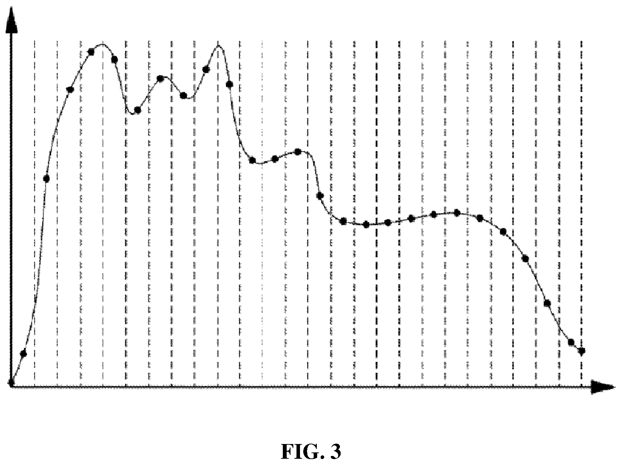

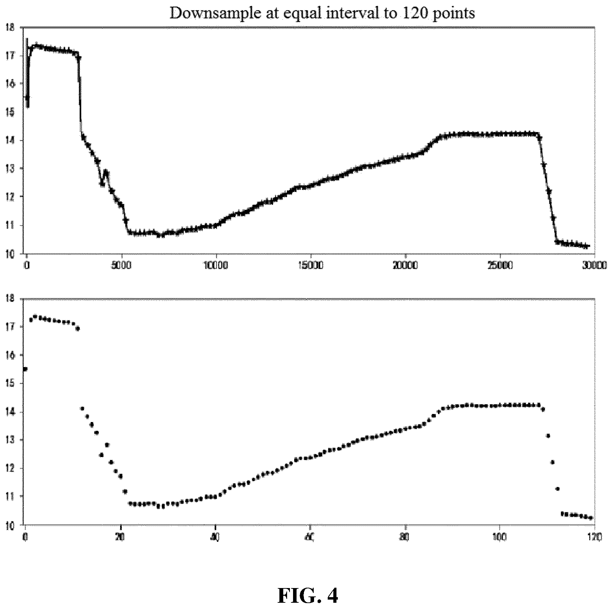

In step D, N data points are extracted from the time series data at equal intervals, to obtain a one-dimensional trend subsequence S2 of the raw data. FIG. 3 schematically illustrates the raw time series data subjected to downsampling at equal intervals. FIG. 4 schematically illustrates the raw time series data subjected to downsampling to 120 data points at equal intervals according to an embodiment.

In step E, the feature subsequence S1 and the trend subsequence S2 are integrated to obtain a sequence S for data mining.

The step E includes the following sub-steps E1 to E2.

In sub-step E1, the trend subsequence S2 is reversed to obtain a subsequence S2'.

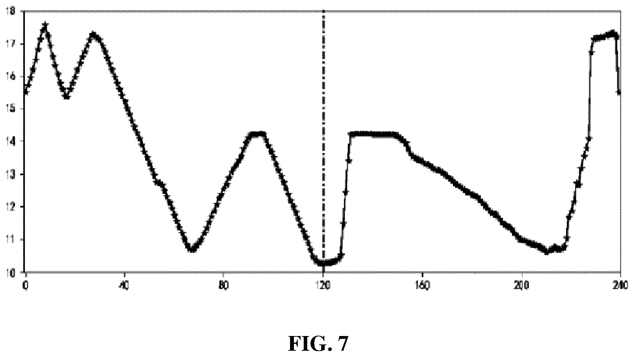

In sub-step E2, the subsequence S1 and the subsequence S2' are concatenated to obtain a one-dimensional array S with a length of 2* 120 in which elements are equally spaced. Reference is made to FIG. 7, which schematically illustrates the sequence S newly constructed based on the feature subsequence and the trend subsequence according to the embodiment.

In the present disclosure, feature information and trend information of the raw data are extracted by constructing the feature subsequence and the trend subsequence, respectively. The target length of the subsequence is set to N so that the lengths of the sample data in the data mining model are equal. Based on the dynamic mesh indicating density distribution of the raw data, key feature points including local breakpoints and inflection points are obtained based on distances calculated by applying the piecewise linear locally, and the priority queue of the key feature points is obtained. The extracted data points for all the sub-grids are aggregated to obtain a feature subsequence in form of one-dimensional array in which elements are equally spaced. In this array, the local data with intensive features is strengthened and the redundant local data that is distributed smoothly is weakened. The trend subsequence in form of one-dimensional array is obtained by extracting N data points at equal intervals. A final sequence is constructed based on the feature subsequence and the trend subsequence, as the basis for data mining. The priority queues of the key feature points are obtained based on distances calculated by applying the piecewise linear locally, and are aggregated to obtain the one-dimensional feature subsequence of the raw time series data finally. The one-dimensional trend subsequence of the raw data is obtained by extracting data points of the target number from the raw data at equal intervals. The sequence indicating the compressed raw data is finally constructed based on the feature subsequence and the trend subsequence. With the present disclosure, the key feature points and the trend information of the raw data can be retained while compressing the raw data into the target number, thereby improving the efficiency and accuracy of data mining, modeling and analysis.

## Claims

1. A method for extracting a trend feature from time series data based on a dynamic mesh, comprising:
a step A of setting a target number N, and dividing time and values in the time series data into m pieces and n pieces respectively based on the dynamic mesh indicating density distribution of the time series data;
a step B of, for each of sub-grids, traversing local data in the sub-grid and acquiring a priority queue of key feature points based on distances calculated through a piecewise linear;
a step C of aggregating the acquired priority queues of the key feature points in all the sub-grids, to obtain a one-dimensional feature subsequence S1 of the time series data;
a step D of extracting data points of the target number N from the time series data at equal intervals, to obtain a one-dimensional trend subsequence S2 of the time series data; and
a step E of integrating the feature subsequence S1 and the trend subsequence S2 into a sequence S for data mining.

2. The method according to claim 1, wherein the step A comprises:
a sub-step A1 of dividing the values into n pieces at equal intervals within a range of the time series data, wherein the time in the time series data serve as an x-axis and the values serve as a y-axis, and n ranges from 3N/4 to N/4, inclusive;
a sub-step A2 of determining whether a condition that data points in n/2 pieces exceed 80% of a length of the time series data is satisfied, and modifying n and returning to the sub-step A1 if it is determined that the condition is not satisfied, until the condition is satisfied or n is equal to N/4; and
a sub-step A3 of dividing the time into m pieces at equal intervals within the range of the time series data, wherein the time series data is distributed among m*n sub-grids, and m=N-n.

3. The method according to claim 1, wherein the step B comprises:
a sub-step B1 of setting a ratio γ, and traversing the local data in the sub-grid;
a sub-step B2 of calculating vertical distances d*ᵢ* from data points to a line connecting a and b sequentially, acquiring a maximum d*ₘₐₓ* from the vertical distances, calculating an average d*ₘₑₐₙ* of the calculated vertical distances, and determining a data point corresponding to d*ₘₐₓ* as an important point P*ᵢ* in a case that d*ₘₐₓ* is greater than or equal to γ* d*ₘₑₐₙ*, wherein a and b serve as endpoints of the local data; and
a sub-step B3 of dividing the local data into two pieces with the important point P*ᵢ* as a cut-off point, and performing the sub-step B2 for the two pieces separately; and
a sub-step B4 of integrating important points P*ᵢ* determined in the sub-steps B2 to B3 into a priority queue for the local data in the sub-grid based on respective vertical distances, after repeating the sub-steps B2 to B3 until no important point is acquired.

4. The method according to claim 3, wherein the sub-step B4 further comprises:
determining a date point corresponding to a median of the local data in the sub-grid as the important point and integrating the determined important point into the priority queue, in a case that the priority queue is empty.

5. The method according to claim 3, wherein the step C comprises:
a sub-step C1 of aggregating the determined important points in all the sub-grids, reducing the ratio γ and returning to the sub-steps B1 to B4 in a case that the number of the important points is less than N, and eliminating redundant data points in a case that the number of the important points is greater than N; and
a sub-step C2 of arranging the determined important points in a time order and removing time information, to obtain a one-dimensional array as the feature subsequence S 1 of the time series data, wherein elements in the one-dimensional array are equally spaced.

6. The method according to claim 5, wherein in the sub-step C1, the redundant data points are eliminated (1) in such a way that at least one important point is retained for each of the sub-grids, and (2) in an ascending order of the vertical distances.

7. The method according to claim 1, wherein the step E comprises:
a sub-step E1 of reversing the trend subsequence S2 to obtain a subsequence S2'; and
a sub-step E2 of concatenating the subsequence S1 and the subsequence S2' to obtain the one-dimensional sequence S with a length of 2N, wherein elements in the one-dimensional sequence S are equally spaced.
